# EUROPEAN PATENT APPLICATION

(11) **EP 2 202 662 A1**
(43) Date of publication of application: **30.06.2010**
(21) Application number: 08172903.0
(22) Date of filing: 24.12.2008
(51) Int. Cl.: G06F 21/04, G06F 21/20

(54) **Portable security device protecting against keystroke loggers**

(71) Applicant: Gemalto SA, 92190 Meudon (FR)
(72) Inventor: Bombay, Bart, Austin TX 78746 (US)
(74) Representative: Wlodarczyk, Lukasz Georges Kazimierz

(57) **Abstract**

The invention relates to a portable security device (SC, TK) comprising host connection means (PAD_H, USB_M) for connecting to a computer (PC), client connection means (PAD_C, USB_F) for connecting to an input device (KBD), filtering means for intercepting sensitive data transmitted from the client connection means (PAD_C, USB_F) to the host connection means (PAD_H, USB_M), and protection means for protecting said sensitive data.

The invention also relates to an input device comprising a portable security device, to a server, to a system comprising a portable security device, a computer and an input device, and to a method for securing data entered into a computer (PC) with an input device (KBD), the method comprising installing a portable security device (TK) between the computer (PC) and the input device (KBD).

## Description

The invention relates to portable security devices for protecting computers, and more particularly to USB tokens.

Computers can be infected by all sorts of malware (viruses, trojans, etc.), and in particular with loggers. There are different types of loggers: USB port loggers, serial port loggers, keyboard loggers, screen loggers, network card loggers, etc. A logger intercepts data flowing through the component it spies. For example, a keyboard logger can intercept all keystrokes, and when it identifies that a password is typed, it can send it to the hacker (or it can redirect every single keystroke to the hacker).

It has been proposed to use portable security devices in order to protect computers. A portable security device considered in the context of the invention is an electronic device, which is light (usually less than 50 grams) and small (its longest dimension is usually less than 10 centimeters). It is often personal. In general, a portable security device is a resource constrained device, in that at least one (if not all) of the following is true: it has a processor but the processor is not very powerful, it has little memory, it does not have a source of power (battery etc.).

The most widespread example of portable security devices is probably the smart card. Smart cards can be connected to computers via smart card readers. Sometimes the reader electronics are embedded in the computer, or even in the smart card (C.F. USB smart cards); this allows direct connection between the smart card and the computer (only a cable, i.e. a passive element, is needed). Billions of smart cards are used in the world, and allow cardholders (people carrying the smart card) to authenticate themselves e.g. to a financial institution (e.g. when making payment with a bank card), to a telecom operator (e.g. when passing phone calls with a GSM phone equipped with a SIM card), or to a government organization (e.g. when authenticating with a healthcare smart card, ID smart card, or electronic passport).

Many other types of portable security devices exist, for example USB keys, parallel port dongles, OTP tokens (OTP stands for One Time Password), TPMs (trusted platform modules, specified by the Trusted Computing Group, and which typically allow to secure a computing device by verifying in particular that the hardware components are not modified, and that any software it runs has the good version and has been properly signed), etc.

Once connected to a computer (e.g. through a USB port, or via a contact-less interface), a portable security device can typically be used for example to encrypt or sign certain data, or to authenticate the user of the computer to a server. However, if a portable security device is lost or stolen, it could be used to impersonate the user. In order to limit this risk, portable security devices are typically protected with a PIN code. Unfortunately, if a keyboard logger is installed, and if the PIN code is typed on the keyboard, a hacker could obtain the PIN, and could then send the commands of his choice to the port to which the portable security device is connected, and again impersonate the user.

It has been proposed to connect the portable security device to the computer through a secure pinpad reader. This is advantageous because the PIN code does not need to leave the pinpad reader (i.e. if the pinpad reader is properly designed, no logger can have access to the PIN). However secure pinpad readers are usually expensive, and are often cumbersome (it is not convenient to always carry a secure pinpad reader). In addition, while they protect the PIN entry (for the portable security device), they don't prevent the logging of sensitive data not directly related to the portable security device. For example, when a user types his password to connect to a web site (e.g. his bank account) on the regular keyboard, this password can still be intercepted, and replayed at a later time. The pinpad reader is helpless, unless the bank modifies its web site and mandates the use of the portable security device in place of the password, which is typically a very heavy change.

It is an object of the invention to improve the security of systems comprising computers, with respect to loggers potentially installed in such computers.

The invention and its advantages will be explained more in details in the following specification referring to the appended drawings, in which Figure 1 represents a first type of portable security device, consisting of a piece of semiconductor, Figure 2 represents another type of portable security device, consisting of a USB token, and Figure 3 represents a system comprising a personal computer, a server, and a portable security device protecting the personal computer against keyboard loggers.

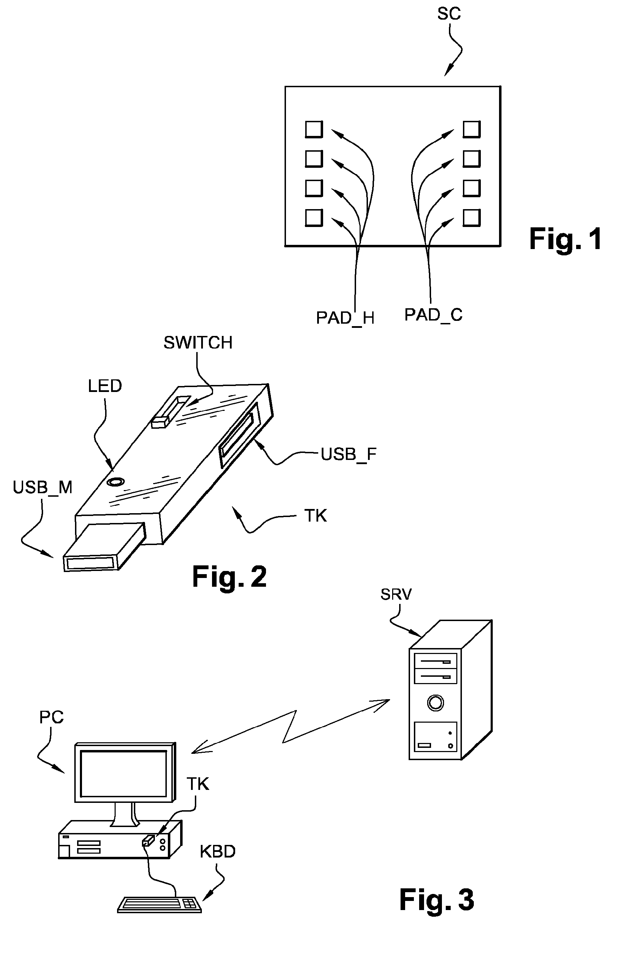

According to a first embodiment of the invention, a portable security device comprises host connection means for connecting to a computer PC. The computer can be for example a laptop, a desktop, a cell phone, a server, a PDA, an MP3 player, a game console, etc. Two examples of such portable security devices are depicted respectively on Figure 1 and on Figure 2.

The portable security device SC of Figure 1 is a piece of semiconductor (typically a die, cut from a wafer). The host connection means PAD_H of the semiconductor SC comprise pads for connecting to the computer. On Figure 1, four pads are represented, corresponding to the four contacts needed in the USB standard, and constitute a USB port, but any other suitable standard could be used instead (e.g. RS232, Ethernet, Wifi, firewire, Bluetooth, any NFC protocol, etc.). A pad is a flat surface used to make electrical contact. The pads can be bonding pads. By soldering or otherwise connecting a USB male connector to the four pads it is possible to plug the portable security device into a USB female connector of a computer. The host connection means also comprise electronic components, and optionally (if not done with electronic means) software components, for managing the communication (protocols, etc.) through the contacts. Such semiconductor portable security device can be embedded in a manner well known in the art inside another portable security device, e.g. in a smart card, in a DIP (dual in-line package), in a SIP (single in-line package), an SMC (surface mounted component) or in a PGA (pin grid array). The smart card can be a contact smart card communicating with the computer through a contact reader, or a contact-less smart card comprising an antenna for communicating with a computer having a contact-less reader. The smart card (or DIP etc.) itself can be embedded in yet another portable security device (e.g. a Bluetooth security device, or a USB key, comprising miscellaneous electronic functions, and relying on the embedded smart card for its security subsystem).

The portable security device TK of Figure 2 is a USB key. The USB key TK can embed a chip such as the chip shown on Figure 1. The USB key host connection means USB_M comprise a USB male connector for plugging the USB key into a USB connector of the computer, either directly or indirectly. For example it can be connected to a USB extension cord connected to the computer (e.g. if the USB female connector of the computer is hardly accessible, which is often the case when it is at the back of the computer), or to a USB hub connected to the computer (e.g. when the computer does not have enough USB connectors available).

According to this first embodiment of the invention, the portable security device also comprises client connection means for connecting to an input device. The input device can be a keyboard (this is the main target of the invention, as it is very commonly used to type PIN codes or passwords, which are sensitive data), however it could also be any input device prone to logging and potentially security sensitive. For example the input device could be a mouse, a trackball or touchpad or a stick, all of which allow to select elements on a screen, and it may be desirable to hide the clicks of the user (e.g. some clicks selecting some distorted digits in an image in order to enter a PIN code), especially when the clicks are processed by a server, rather than by the computer (potentially infected) to which the portable security device is connected.

The input device could also be a device generating more complex data, a few examples of which are given below. A first example consists of a microphone. When simply recording a song during a karaoke party, there is typically no sensitive information. But when dictating a credit card number during a Telephony over IP session, or when carrying out a biometric voice recognition (as opposed to simple voice to text conversion), the information may be classified as sensitive. The input device could also be a scanner (when scanning regular documents, it is not critical, but when scanning ID documents, which may for example comprise fingerprints or other sensitive material, it becomes critical). The input device could also be a web cam (when chatting with a friend, it is not critical, but when using it as an iris recognition tool, it becomes critical). Many other input devices can be protected.

The client connection means can use a technology different from the one used for the host connection means (for example USB connector for the host connection means, and PS2 connector for the client connection means).

The client connection means PAD_C of portable security device SC shown on Figure 1 comprise four pads corresponding to the four contacts needed in the USB standard, and constitute a USB port. By soldering or otherwise connecting a USB female connector to those four pads it is possible to plug a USB input device into the portable security device SC.

The client connection means USB_F of portable security device TK shown on Figure 2 comprise a USB female connector, into which an USB compliant input device (e.g. a USB keyboard) can be plugged, directly or indirectly (e.g. USB cable extension).

According to this first embodiment of the invention, the portable security device also comprises filtering means for intercepting sensitive data transmitted from the client connection means to the host connection means, and protection means for protecting sensitive data. For example, when the input device is a keyboard, the portable security device transmits to the computer the keys pressed by the user when the user is typing an email, but when the user types a password the portable security device can intercept the password and secure it. The filtering may be based on rules loaded into the portable security device, and a parser analyzing the flow of data coming from the input device in order to identify which elements are sensitive. Example of simplified rule: the portable security device may store the login name of the user, and know that after typing his login, the user will type his password, which is sensitive.

In one embodiment, the portable security device comprises a USB hub logic. The portable security device can appear to the computer as a USB client (or possibly as several USB clients, e.g. a USB mass storage device and a USB smart card), and the input device (e.g. USB keyboard) can appear to the computer as another USB client. The portable security device filtering means may embed logic to spy communication within the USB hub in order to intercept and modify sensitive data before they are output to the computer via the host connection means. In preferred embodiments, a standard USB hub logic library can be modified in order to incorporate the filtering means (this may cause the hub to behave in a non standard way). In particular the hub could be modified to spy the enumeration of the devices connected to the portable security device, by observing the standard USB enumeration process. If a device enumerates as a keyboard (HID), then the portable security device preferably enables password protection on it (e.g. intercept passwords and redirect them e.g. to a smart card chip embedded in the portable security device, e.g. via GPIO wiring, SPI, I2C...). This modified USB hub may be implemented in the form of an ASIC. With the advent of USB on the go, it is now also possible for two USB clients to communicate together directly (without going through a USB host).

In another embodiment, instead of a modified hub logic, the portable security device comprises a USB host logic for communicating with the input device and a USB client logic for communicating with the computer. This is advantageous because it is typically simpler to implement, as it is possible to reuse USB host logic and USB client logic without modification, and to add the filtering means in the middle, while with the USB hub solution it is in general necessary to modify the USB hub logic in order to incorporate the filtering means inside, especially when not using USB on the go extensions. In this other embodiment, it remains possible to add a non modified USB hub logic inside the portable security device, e.g. in order to incorporate the possibility to plug more than one USB device to the portable security device. For example, it is possible to plug several input devices to be protected, such as a mouse and a keyboard. It is even possible to use the hub in order to give the possibility to plug USB devices which a priori do not need to be protected with this portable security device (e.g. a USB printer, a USB speaker, a USB display, or any device which does not input any information, a fortiori any sensitive information, into the computer), in which case the portable security device offers the possibility to avoid using a USB hub when one was previously needed (e.g. when the computer does not have enough USB connectors available).

The portable security device preferably embeds a TCP/IP network stack, in a manner well known for example in the field of smart cards (TCP/IP smart cards were introduced in the late nineties). This allows the portable security device to establish communications with external entities such as servers. Typically, the computer acts as a router for the portable security device, i.e. any data the portable security device wishes to send to a network entity (e.g. server) goes through the computer which forwards it to the next router. A server may identify the IP address of the computer from which the portable security device connects, and can access the TCP/IP portable security device connected to the computer, as it would access a TCP/IP smart card connected to the computer (noting that the portable security device can in fact be a TCP/IP smart card). In many cases, existing servers establish an SSL or TLS connection in order to obtain e.g. user passwords from a computer (e.g. bank servers managing customers' accounts via the web). In such situation, it is preferred to use the same protocol (except that the SSL or TLS connection originates from the portable security device instead of the computer) in order to minimize changes to the system.

In alternative embodiments, the portable security device may embed its own network connectivity means (e.g. Wifi card), and may then communicate with other entities such as servers while circumventing the computer (and its potential viruses). However, most often, the portable security device relies on the computer for network communications with other entities.

In preferred embodiments, the portable security device further comprises computer monitoring means set to install an agent in the computer PC. The agent is set to inform the portable security device whenever the data expected from the input device by the computer is sensitive data. This can be helpful when it is insufficient to rely on rules within the portable security device, or it can complement the rules (e.g. as a confirmation tool), or replace them.

For example, the portable security device may embed some memory appearing as a mass storage device, the memory storing the agent, and comprising an Autorun feature automatically installing the agent in the computer when the portable security device is connected to the computer. In a variant, the agent is not auto-installed from the portable security device itself, but installed separately (e.g. from an installation CD, or from an auto-update server).

The agent may include a browser extension (e.g. BHO for Microsoft Internet Explorer) monitoring web pages as they are downloaded, and identifying web pages that have password entry textboxes. Password entry textboxes are special boxes that are commonly used, and typically display bullets or asterisks instead of the typed characters (however the computer of course receives the real characters, so typically a virus can access such characters, although a third party looking over the shoulder of the user would not read the characters on the screen). When the browser extension detects a password text box, it can monitor its behavior. Whenever the text box becomes active (user clicks on it or tabs into it, and the web page is active), then the browser extension can inform the portable security device accordingly. At such time, if the user types anything on the keyboard, whatever he types is supposed to go to the password text box and is therefore sensitive. Likewise, the browser extension can also inform the smart card whenever the password text box becomes inactive (e.g. if the user types OK, or tabs to next field, or brings another window to front). Thus, the portable security device can know exactly when it should be intercepting the data from the keyboard.

The agent may also monitor any type of window (it is not necessarily limited to password text boxes, and not even to browser windows, although the browser is a preferred target). For example, the agent may recognize that an email client (e.g. Eudora) is opening a proprietary password entry window, and accordingly instruct the portable security device to intercept the password. Then the portable security device could send the password (hidden from the computer) to a modified POP server in encrypted form, and this would secure the password entry in Eudora against keyboard loggers, without having to modify the Eudora email client (only the POP server would be modified and would discard the fake password received from the non modified Eudora client, considering only the encrypted password received from the portable security device). This is advantageous because a typical organization may have thousands of Eudora (or other) email clients, which are under the control of users who are not security specialists, while it typically only has one POP server, and typically has full control over the POP server. One way for the agent to monitor the active windows as they are launched is to call the PsSetCreateProcessNotifyRoutine routine available on Microsoft™ Windows operating systems. Such notification mechanism can be used to force the operating system to execute a hooking mechanism whenever a Microsoft™ Windows process is created (C.F. in particular European patent application 07 012 808.7 / PCT patent application PCT/IB2008/001697). It is possible to identify that an application has created a Windows Edit Control with the ES_PASSWORD Rich Edit Control Style, as this is in general the easiest way for an application to create a password dialog box (why redevelop it from scratch when the operating system already has a feature for automatically hiding the typed characters by replacing them with black circles). The agent may identify the application based on its name or base on more elaborate algorithms (e.g. hash of supported applications can be stored in the agent), and therefore know in advance how the application behaves. The agent may monitor window messages targeting the windows that are scrutinized, using for example the Microsoft Windows SetWindowsHookEx function (for Microsoft Windows environments).

The embodiment relying on an agent is convenient because it is typically automatic (no user intervention), however by hypothesis the computer can be infected by viruses, and it is conceivable that a specific virus be implemented in order to target specifically this agent. For example the virus could be designed to delete any notification requesting the portable security device to treat certain data as sensitive data, thereby allowing their interception.

In order to fight against such attacks, the portable security device can be set to recognize certain data coming from the client connection means as an indication that subsequent data coming from the client connection means are sensitive data. Since such data is only exchanged between the input device and the portable security device, and is not made available to the computer via the host connection means, no virus in the computer is able to have access to it. Three use cases are described below in order to illustrate this possibility. Those use cases are advantageous because they allow securing computers (e.g. the computers of all employees of a big corporation) without having to modify the client applications on such computers, but only the central server to which the client application connects. In all three exemplifying use cases, the following is assumed. The input device is a keyboard, and the data received on the client connection means correspond to keystrokes. The user has to type a special key combination (comprising at least one key), e.g. CTRL-ALT-F10, in order to indicate that he's about to type sensitive data. The portable security device can progressively buffer sensitive data until a second special combination (e.g. CTRL-ALT-F11) is pressed, indicating specifically the end of sensitive data input. The same combination (e.g. CTRL-ALT-F10) can be used twice, both to identify the beginning and the end of the sensitive data, this is simpler and preferred in most cases, but in some instances (especially when managing several concurrent sensitive data entries in parallel) having distinct combinations can avoid certain ambiguities. Alternatively, a single combination can be used only once, and the portable security device could detect that the expected number of bytes of sensitive data has been received without need for another combination to be pressed (provided that such number is known by the portable security device). This can be quicker, but it is generally less secure and may confuse the user in case he mistyped sensitive data (e.g. typed less or more keys than expected, by accident). Optionally, the second combination of keys is simply the "ENTER" key, which is typically used for validating sensitive data entry. Optionally, when operating in secure mode (e.g. after typing CTRL-ALT-F10 for the first time), the portable secure device can discard any key that can correspond neither to a valid sensitive data element, nor to a valid key combination triggering the beginning or end of sensitive data input. For example, if the same sequence is used both for beginning and end of sensitive data input, the "ENTER" key can be considered as invalid and be discarded if typed in the middle of the sensitive data (and if does not itself correspond to the combination identifying the end of the sensitive data). Similarly, shortcuts (such as ALT-TAB under Microsoft Windows) changing the active window can optionally be trapped and discarded. Then, once the sensitive data has been fully typed (preferably with the same combination of keys at the beginning and at the end) the portable security device preferably sends to the computer, through the host connection means, a number of star characters, or any agreed sequence of characters, or even a random number of random characters, as if such characters had been typed by the user in place of sensitive data. In the sequel we will consider that the portable security device has sent star characters. The number of stars is preferably fixed and independent of the length of sensitive data, in order to not let a potential virus sitting in the computer infer any information regarding the sensitive data. If the client application running on the computer and requesting sensitive data has not been modified (e.g. it is an off-the-shelf client application, not necessarily designed to work with the portable security device according to the invention), it considers that the sensitive data typed by the user is a series of stars.

### Use case 1:

Sensitive data represent a password. The client application tries to authenticate to a server. The server identifies that the password received from the client application is wrong but is modified to recognize the agreed characters (e.g. eight stars), and expects a portable security device to provide the real password.

The server connects to the portable security device (e.g. via TCP/IP) in order to obtain the real password. The portable security device preferably authenticates the server in order to make sure that it is one of the authorized and trusted servers (e.g. the portable security device can store a list of authorized servers with their X509 certificates, and check the CRL in order to make sure that the certificates are still valid). If the server authentication succeeds, the portable security device sends the password securely (e.g. via an SSL session) to the server. N.B. an SSL session negotiation already comprises the authentication of the server, so it is not necessarily needed to implement server authentication before establishing an SSL session, unless specific aspects not covered in SSL have to be verified.

In order to simplify the implementation, the portable security device preferably uses a single key combination (e.g. CTRL-ALT-F10) for detecting both the beginning and the end of sensitive data, and refuses any parallel input of passwords (only one password can be typed at a time). If the user misbehaves, and starts typing a first password in a first password window, interrupts himself in the middle, and then tries to start typing another password in another window by clicking on this window with the mouse, the portable security device preferably remains in secure mode all the time until the second CTRL-ALT-F10 is pressed, i.e. it ends up validating the beginning of the first password followed by anything that was typed in any window until the second CTRL-ALT-F10 as being the full first password. This is a failsafe strategy in which the authentication fails, but no sensitive information is leaked to the computer (possibly infected). Therefore in this preferred embodiment the user has to be educated on how to use the portable security device, and be informed that each password input should be fully completed before typing another password (it is quite natural anyway, so it is not a major limitation). In improved versions, both the mouse and the keyboard are connected to the computer through the portable security device, and the portable security device can deactivate or control the mouse during password entry (after CTRL-ALT-F10) as well as deactivate keyboard features such as ALT-TAB under Microsoft Windows (C.F. above), in order to prevent parallel passwords entries attempts. Mouse deactivation could also be done by a software agent instead of having to connect the mouse to the portable security device, but the agent being run in the computer, it would be prone to attacks by hackers. It would also be possible to not control the mouse at all. This simplification (one password at a time) is advantageous in particular because it does not require the use of an agent monitoring the active window (corresponding to the application requesting the password) in the computer as there is an immediate mapping between the (only) server attempting to obtain the password and the (only) password captured by the portable security device. This avoids possible difficulties in associating a given password with a given server.

### Use case 2:

This use case is a variant of the first one, in which it is the portable security device which initiates the connection to the server. After the portable security device has detected a password (e.g. between two CTRL-ALT-F10 keystrokes), it can rely on an agent to check for example the active window (in which the password was supposed to be typed) and possibly other GUI parameters. If the active window corresponds to one of the applications supported by the portable security device, the portable security device initiates a secure connection with the server associated with this application (the list of trusted servers is preferably pre-stored in the portable security device) and provides the password securely. The server discards the other password (received from the client application) which content is a series of stars. Alternatively the server is not modified, and believes that there has been a wrong attempt (stars) followed by a good attempt. This works properly if the server secures password communication with a given technique (such as SSL or TLS tunnels), and if the portable security device uses the same technique (e.g. creates such a tunnel, so that the server does not see that it does not originate from the computer). This last variant is interesting because it protects the computer without changing neither the client application (which is often impossible without the involvement of the company that developed this client application), nor the server (which might be hard to modify in some instances too, e.g. if it is purchased from a third party, and if the developer of relevant components of the server has not given all information needed to modify such components, and is not cooperative).

In this second use case, there may be several parallel passwords inputs (however this is not recommended, because it can not only confuse the user but also cause security risks). This use case relies on an agent in the computer in order to identify which application (and therefore which server) is used, so a virus could potentially manage to have the password expected by one server (e.g. your online bank account server) sent to another server (e.g. your yahoo mail server). This poses no major security threat if all servers are trusted, other than denial of service attack. If it is desired to have the possibility to type several passwords in parallel (which is in general not a very good option, because it multiplies the possibilities of mistakes), it is proposed to use two different key combinations (e.g. CTRL-ALT-F10 to begin and CTRL-ALT-F11 to end password input). It is further highly recommended to not allow any insecure data input, once one secure session has been open (first CTRL-ALT-F10), until all secure sessions are closed (number of CTRL-ALT-F11 reaches the same value as number of CTRL-ALT-F10). A new secure session is opened each time a new CTRL-ALT-F10 is pressed, and all secure sessions are closed when a CTRL-ALT-F11 has been pressed for each CTRL-ALT-F10. In other words, it is recommended not to allow any insecure session in the middle of secure sessions, since the swap between sessions is based in information coming from the computer (typically information relating to the active window), and since such information could potentially be compromised. A hacker could then try to mess with the sessions by exchanging them and obtain confidential information e.g. simulating a swap to an insecure session, such as simulating that the user opens a word document, and the portable security device would think that the user is currently typing a word document while he is still entering a password. By not allowing any insecure data input, the hacker could still mess with the sessions and cause wrong passwords to be sent (he could exchange the active windows and cause part or all of password for application #1 to be considered as part or all of password for application #2), but he would not have direct clear text access to the keys pressed by the user, which would render any attack a lot more complex. If the user himself did a mistake or does not remember what he has been doing, it is possible to have another combination (e.g. CTRL-ALT-F12) clearing all sessions and any elements of password data buffered so far by the portable security token.

### Use case 3:

In this use case, it is proposed to secure applications relying on portable security devices such as smart cards for secure email, etc. without having to update them, but only upgrading the portable security device. The new portable security device offers the possibility to have a secure PIN entry without a pinpad reader. Before typing the PIN, the user types for example CTRL-ALT-F10. The portable security device then recovers the PIN typed by the user and sends a fake PIN (e.g. eight stars) to the computer via the host connection means. The portable security device preferably relies on an agent in the computer in order to check the active window (in which sensitive data were to be typed), and if the active window corresponds to the PIN verification window of an application, the portable security device verifies the PIN that it has memorized (and may discard the PIN sent by the application, which is preferably a series of predefined characters such as stars, as explained earlier). Of course, if the application is updated, it's even better (no need to send a fake PIN to the application, and then to discard the fake PIN received from the application).

In a variant, instead of relying on data sent by the input device (such as CTRL-ALT-F10 key combination) in order to identify that subsequent data is sensitive data, the portable security device may comprise input means (preferably a switch SWITCH as shown on Figure 2, but it could also be a any other appropriate input means such as a small keypad, a small wheel such as a mouse wheel, or even a small microphone or a small touch screen) for informing the portable security device that it should process subsequent data coming from the client connection means as sensitive data. The portable security device is typically equipped with hardware countermeasures which make it very hard to open it and change anything inside it without visibly damaging it and without triggering an automatic protection mechanism. In addition the portable security device can be permanently carried by the user (i.e. never left unattended and therefore not prone to physical attacks).

It is possible for the portable security device to combine any of the three solutions proposed above for determining when the data coming from the input device is sensitive, i.e. to rely on an agent in the computer, and/or to also rely on certain data coming from the input device (e.g. CTRL-ALT-F10 combination), and/or to also rely on input means (e.g. a switch) on the portable security device itself. In case two or more of the solutions give conflicting information, it is preferred to rely:
- first on the input means (typically least user friendly but most secure);
- then on the special combination of data coming from the input device, slightly more user friendly, and in principle very secure, except that the input device can have been manipulated, e.g. some hardware key logger can have been inserted inside a keyboard without the user noticing it, e.g. by visiting offices during the night;
- and last on the agent in the computer, which in general is the most user friendly solution as it typically does not involve any action from the user, other than the actions that are normally expected in absence of the invention when entering sensitive data via the input device, but which is not as secure as the other two.

It is also possible to decide that whenever any one of the solutions informs that subsequent data is sensitive, it should be treated as sensitive. Optionally an alarm could be triggered whenever conflicting information is given by any two of the solutions, informing of the likelihood that one of the solutions has been hacked, and that certain measures should be taken, e.g. check that the antivirus is really up to date, that there is no new spyware in the computer (not yet detected by state of the art anti-spyware), etc.

In preferred embodiments, a portable security device further comprises output means (for example a light emitting diode LED) for informing a user of the portable security device that it is actually processing data coming from the client connection means as sensitive data. Instead of the LED, it is possible to use other output means, such as a small LCD, a small sound card, a buzzer or a vibrator, to name a few. It increases security to have an output mean under the sole control of the portable security device confirm that secure management of data input is activated (E.G. the LED may flash red to confirm this fact). A pop up window on the computer could also inform the user (and warn him to check this LED, in case there is a LED), but of course the pop up can be closed by a spy-ware, or on the contrary it can be simulated by a spy-ware, in which case the user would believe that he's securely typing his secrets while in fact they go straight to the hacker. When such output means are available, the user of the portable security device should be trained not to type any secret until the output means testify that the portable security device has properly identified the situation and expects sensitive data to be input (which it will manage securely). The output means are particularly useful when the filtering means of the portable security device rely at least in part on an agent installed in the computer in order to trigger the protection of sensitive data. When the filtering means are triggered solely by a special key combination (e.g. the above CTRL-ALT-F10 sequence), or solely by input means (such as a switch) on the portable security device itself, then normally there is no doubt that the portable security device operates in secure mode (since explicitly requested by the user through means which are out of the reach of any malware installed in the computer), and the output means are more of a confirmation for the user, than a really significant security feature.

In preferred embodiments, protecting sensitive data comprises encrypting them. Environments in which the invention is most efficient comprise environments where sensitive data are not to be used by the computer itself. Indeed, if the computer needs to use the sensitive data, it normally has to decrypt them, which implies having decryption keys somewhere in the computer (a malware could manage to find them), and at some point in time manipulating sensitive data in clear text (a malware could manage to intercept them at that stage). For example, in preferred environments, sensitive data may be used by a remote server, or by the portable security device itself (e.g. it can be its own PIN code), as seen in examples above. It is typically much easier to secure a server (and a fortiori a portable security device!), than a number of computers which are under the control of users, who are not necessarily well trained on security, who may install all sorts of software (potentially including malware), and do all sorts of mistakes from a security standpoint (such as refusing the automatic installation of critical patches, etc.). With such environments, the portable security device can establish a secure channel with the server, and therefore although sensitive data possibly travel through an infected computer, they never appear in clear text within the computer, and the key material necessary to decrypt them is not present in the computer.

For protecting sensitive data, encryption (in the strict sense), is not the only possibility. For example, assuming that sensitive data represent a password, the portable security device could request a challenge from the server (the challenge being preferably both signed and encrypted by the server in order to reduce the likelihood of man in the middle attacks and brute force attacks). Then the portable security device could append the challenge to the password (preferably after decrypting it and checking its signature), hash the result (password plus challenge) and send the hash back to the server for verification. In an improved version, it is possible for the portable security device to additionally generate a challenge itself and append it too before hashing, then hash the resulting data (password followed by the two challenges, which are typically two random numbers). It is also possible for the portable security device to use an event counter, to append this counter to the password and challenge(s), to hash the result (password + server challenge + optionally portable security device challenge + event counter), and to increment the counter both in the server and in the portable security device. It is also possible for the portable security device to sign the hash (e.g. with an RSA private key) before sending it back to the server. The server could then compute the same hash and check the signature with the corresponding public key of the portable security device. In those variants, the sensitive data is never "encrypted", but only hashed, or hashed and signed.

The invention also relates to an input device, in particular a keyboard, embedding a portable security device as described above. A keyboard comprises a keyboard interface for connecting the keyboard to a computer. The portable security device is preferably connected in series with the keyboard interface. For example, if the keyboard interface comprises a USB male connector, the USB male connector is pluggable into the USB female connector of a computer, and the internal side of the USB male connector is connected to the host connection means of the portable security device, and, preferably within the casing of the keyboard, the keyboard electronics are connected to the client connection means of the portable security device (rather than directly to the USB male connector of the keyboard as in a conventional keyboard). The input device may be the keyboard of a laptop computer.

The invention also relates to a server SRV comprising authentication means to authenticate a user of a computer PC connected to the server SRV. The authentication mechanism relies in particular on user authentication credentials (e.g. password) supplied by the user, typically by entering them via an input device connected to the computer. When the authentication credentials submitted by the computer to the authentication means of the server SRV do not match the expected user authentication credentials (e.g. do no correspond to the password stored in the server), the authentication means are set to check whether the submitted authentication credentials match an agreed format (e.g. series of star characters) informing of the availability of a portable security device TK connected to the computer PC. Indeed, a portable security device according to the invention typically replaces sensitive data typed by the user by an agreed template such as a series of stars. A user or a malware could also, in absence of any portable security device, send the same template (e.g. by typing the stars on the keyboard), which would mislead the server, but this is unlikely to happen, and does not in principle represent a security threat with respect to disclosure of sensitive data. Upon positive verification (if the received credentials match the agreed template), the authentication means of the server SRV are set to attempt a user authentication with the portable security device TK. For example, the server SRV may request the portable security device TK to send the user authentication credentials securely (e.g. via an SSL session). Such server SRV is advantageous as it allows managing user authentication securely without having to modify the client application on the computer PC.

The invention also relates to a system comprising a portable security device as described above, a computer and an input device. In preferred embodiments, the system further comprises a server SRV to which a user of the computer PC wishes to authenticate. The portable security device is set to identify authentication credentials (e.g. password) requested by the server SRV as sensitive data, and to establish a secure connection with the server SRV for exchanging said authentication credentials.

The invention also relates to a method for securing data entered into a computer against loggers. In particular it relates to a method in which data is entered into a computer PC with an input device KBD, the method comprising installing a portable security device TK between the computer PC and the input device KBD, identifying sensitive data within said data, and protecting said sensitive data, within the portable security device, before they reach the computer PC (in case they need to travel through the computer PC).

The preferred embodiments and variants described above in relation to any one of the following five objects: {portable security device, input device, server, system, method}, can apply equally to the other four objects.

## Claims

1. Portable security device (SC, TK) comprising:
• host connection means (PAD_H, USB_M) for connecting to a computer (PC),
• client connection means (PAD_C, USB_F) for connecting to an input device (KBD),
• filtering means for intercepting sensitive data transmitted from the client connection means (PAD_C, USB_F) to the host connection means (PAD_H, USB_M), and
• protection means for protecting said sensitive data.

2. Portable security device (SC, TK) according to claim 1, wherein the host connection means (PAD_H, USB_M) and/or the client connection means (PAD_C, USB_F) comprise a USB port.

3. Portable security device (SC, TK) according to claim 2, wherein the portable security device (SC, TK) comprises a USB host logic for communicating with the input device (KBD) and a USB client logic for communicating with the computer (PC).

4. Portable security device (SC, TK) according to claim 2 or 3, wherein the portable security device (SC, TK) comprises a USB hub logic.

5. Portable security device (SC, TK) according to any previous claim, further comprising computer monitoring means set to install an agent in the computer (PC), wherein the agent is set to inform the portable security device (SC, TK) whenever data expected from the input device (KBD) by the computer (PC) are sensitive data.

6. Portable security device (SC, TK) according to any previous claim, further set to recognize certain data coming from the client connection means (PAD_C, USB_F) as an indication that subsequent data coming from the client connection means (PAD_C, USB_F) are sensitive data.

7. Portable security device (SC, TK) according to any previous claim, comprising input means (SWITCH) for informing the portable security device (SC, TK) that it should process subsequent data coming from the client connection means (PAD_C, USB_F) as sensitive data.

8. Portable security device (SC, TK) according to any previous claim, further comprising output means (LED) for informing a user of the portable security device (SC, TK) that it is actually processing data coming from the client connection means (PAD_C, USB_F) as sensitive data.

9. Portable security device (SC, TK) according to any previous claim, wherein protecting sensitive data comprises encrypting them.

10. Input device (KBD) embedding a portable security device (SC) according to any previous claim.

11. Server (SRV) comprising authentication means to authenticate a user of a computer (PC) connected to the server (SRV) with user authentication credentials, **characterized in that** when the authentication credentials submitted to the authentication means do not match the expected user authentication credentials, the authentication means are set to check whether the submitted authentication credentials match an agreed format informing of the availability of a portable security device (TK) connected to the computer (PC), and **in that** upon positive verification, the authentication means are set to attempt a user authentication with the portable security device (TK).

12. System comprising a portable security device (SC, TK) according to any of claim 1 to 9, a computer (PC) and an input device (KBD).

13. System according to claim 12 wherein the input device (KBD) is a keyboard.

14. System according to claim 12 or 13, further comprising a server (SRV) to which a user of the computer (PC) can authenticate, wherein the input device (KBD) is set to allow input of user authentication credentials, wherein the portable security device (SC, TK) is set to identify user authentication credentials requested by the server (SRV) as sensitive data, and to establish a secure connection with the server (SRV) for sending said user authentication credentials.

15. Method for securing data entered into a computer (PC) with an input device (KBD), the method comprising installing a portable security device (TK) between the computer (PC) and the input device (KBD), identifying sensitive data within said data, and protecting said sensitive data, within the portable security device (TK).
